# EUROPÄISCHE PATENTANMELDUNG

(11) **EP 0 542 143 A1**
(43) Veröffentlichungstag der Anmeldung: **19.05.1993**
(21) Anmeldenummer: 92119014.6
(22) Anmeldetag: 06.11.1992
(51) Int. Cl.: B32B 33/00, B65D 65/46, B32B 23/04, B32B 27/10

(54) **Kompostierfähiges Verpackungsmaterial aus mehrlagigen Verbundstoffen**

(30) Priorität: 15.11.1991 DE 4137658
(71) Anmelder: PAPIERFABRIK OBERSCHMITTEN GmbH, D-63667 Nidda (DE)
(72) Erfinder: Schleier, Arnold, W-6312 Laubach (DE); Arenbeck, Helmut, Dipl.-Chem., W-6478 Nidda-Oberschmitten (DE)
(74) Vertreter: Dickel, Klaus, Dipl.-Ing.

(57) **Zusammenfassung**

Ein Verpackungsmaterial aus mehrlagigen Verbundstoffen (10) umfaßt Schichtmaterialen (11, 12, 13), die sowohl einzeln als auch in Kombination miteinander vollständig kompostierfähig sind. Es trägt auf der dem Produkt zugewandten Seite eine Laminatschicht (13) aus lebensmittelrechtlich zulässigem Papier, das sich bevorzugt durch die Verwendung von ungebleichter, intensiv gemahlener Cellulose, die Beigabe wasserlöslicher Polysaccharide und die Verdichtung der Papierbahn in einem Superkalander auszeichnet. Das Material ist voll recyclingfähig und infolge der Abwesenheit chemischer Zusatzstoffe rückstandsdrei kompostierbar. Es läßt sich für Tüten, Beutel und Säcke sowie sonstige Behältnisse zur Aufnahme von Lebensmitteln einsetzen. Die Rückseite des Verbundstoffes (10) kann ebenfalls mit einer lebensmittelrechtlich zulässigen Papierschicht (15) kaschiert sein. Als Haftvermittler kann Leim oder ein thermoplastischer kompostierfähiger Biokunststoff eingesetzt werden.

## Beschreibung

Die Erfindung betrifft ein Verpackungsmaterial aus mehrlagigen Verbundstoffen.

Verpackungsmaterialien, die einen hohen Recyclinganteil aufweisen, dürfen mit Lebensmitteln nicht in Kontakt treten. Aus diesem Grunde hat man bislang diese Materialien, soweit sie im Lebensmittelbereich eingesetzt wurden, auf der dem Produkt zugewandten Seite mit einer Kunststoff-Folie kaschiert. Dies führt zu gravierenden Nachteilen, da das Material infolge der anhaftenden Kunststoffschicht nicht oder nur schwer einem Recyclingvorgang zugeführt werden kann.

Angesichts dieser Problematik liegt der Erfindung die Aufgabe zugrunde, ein Verpackungsmaterial der eingangs genannten Art zur Verfügung zu stellen, das sowohl lebensmittelrechtlich zulässig ist als auch ohne weiteres vollständig recycelt und/oder kompostiert werden kann.

Gelöst wird diese Aufgabe gemäß der Erfindung dadurch, daß mehrlagige Verbundstoffe eingesetzt werden, die sowohl einzeln als auch in Kombination miteinander vollständig kompostierfähig sind. Im einzelnen handelt es sich um Kombinationen aus Papier/Karton/Biokunststoff, die in beliebiger Reihenfolge und Stärke miteinander zusammengeführt werden können.

Bei der Kombinationa Papier/Karton besteht die dem Produkt zugewandte Laminatschicht aus im Lebensmittelbereich zulässigem Papier. Ein derart aufgebauter mehrlagiger Verbundstoff eignet sich in vielfältiger Weise für den Einsatz im Lebensmittelbereich. Neben der Verwendung als Einschlagpapier kann der Verbundstoff auch zur Herstellung von Tüten, Beuteln und Säcken sowie zu gestanzten, geformten und tiefgezogenen Behältnissen eingesetzt werden. Dabei besteht der wesentliche Querschnittsbereich aus kostengünstigem Recyclingmaterial, während die dem Produkt zugewandte Seite aus reinem Papier besteht. Damit ist der Gesamtstoff praktisch rückstandsfrei kompostierbar.

Wenn die dem Produkt abgewandte Seite aus Kartonagen mit hohem Recyclinganteil besteht, lassen sich hieraus kostengünstige Behältnisse schaffen, die der Verpackung und dem Transport von Lebensmitteln dienen können, wie Teller, Schalen und Platten. Außerdem eignen sich die papierbeschichteten Kartonagen als Behältnisse für den Straßenverkauf von Lebensmitteln, wie etwa in Schnellimbißverkaufsständen oder als Verpackung von Tiefkühlprodukten und Fertiggerichten.

Rückstandsfrei kompostierbar ist auch ein mehrlagier Verbundstoff aus der Materialkombination Papier/Biokunststoff. Hierbei wird das lebensmittelrechtlich zulässige und vollständig kompostierfähige Papier mit einem aus natürlichen Rohstoffen bestehendem thermoplastischen Biokunststoff, der ebenso vollständig kompostierfähig ist, beschichtet. Dieser mehrlagige Kunststoff eignet sich in hervorragender Weise für den Einsatz im Lebensmittelbereich, insbesondere zur Verpackung von leicht verderblichen Produkten, oder von Produkten, deren Haltbarkeit für einen längeren Zeitraum bestimmt sind. Hier wird der thermoplastische Biokunststoff dem Lebensmittel zugewandt, damit das Verbundmaterial auf Verpackungsmaschinen zu thermisch versiegelten Tüten und Beuteln verarbeitet werden kann. Der mehrlagige Verbundstoff übt in diesem Fall sowohl die Funktion des Siegelmediums aus und stellt gleichzeitig auch eine Barrierewirkung zum Schutz des Packungsinhalts dar.

Besonders bevorzugt wird als dem Produkt zugewandte Laminatschicht ein Papier eingesetzt, das sich durch die Verwendung von ungebleichter, intensiv gemahlener Cellulose, die Beigabe wasserlöslicher Polysaccharide und die Verdichtung der Papierbahn in einem Superkalander auszeichnet. In diesem Papier sind keinerlei übliche chemische Zusatzstoffe enthalten, so daß sich das Material rückstandsfrei kompostieren läßt. Dies gilt im besonderen dann, wenn es sich sowohl bei der Kartonage als auch bei dem Kaschierleim oder dem thermoplastischen Biokunststoff als Kaschiermedium um biologisch abbaubare Materialien handelt.

Das Trägermaterial des mehrlagigen Verbundstoffes kann sowohl Karton als auch Papier sein. Besteht das Trägermaterial aus Recycling- oder Cellulosekarton, kann es sowohl mit Papier oder/und Biokunststoff beschichtet werden. Besteht das Trägermaterial aus Papier, kann es wahlweise ein- oder beidseitig mit Biokunststoff beschichtet werden.

Weitere Einzelheiten, Vorteile und erfindungswesentliche Merkmale ergeben sich aus der nachfolgenden Beschreibung des erfindungsgemäßen Verpackungsmaterials, unter Bezugnahme auf die beigefügten Zeichnungen. Dabei zeigen im einzelnen:
- Figur 1: einen Querschnitt durch eine erste Ausführungsform des erfindungsgemäßen Verpackungsmaterials, stark vergrößert, und
- Figur 2: eine der Figur 1 entsprechende Darstellung einer anderen Ausführungsform des erfindungsgemäßen Verpackungsmaterials.

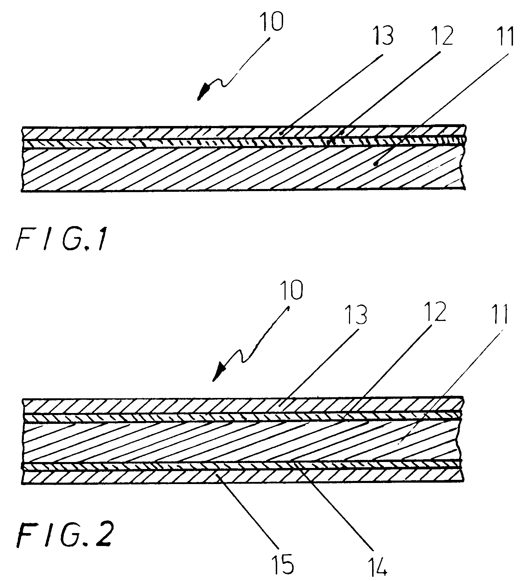

Das in Figur 1 wiedergegebene Verpackungsmaterial ist in seiner Gesamtheit mit der Bezugsziffer 10 versehen. Es besteht aus einer Grundschicht 11, die aus Papier oder Karton mit einem hohen Recycling-Anteil hergestellt ist. Dieses Material ist kostengünstig verfügbar und besitzt eine hinreichend hohe Festigkeit für die Herstellung von Tüten, Beuteln und Säcken, wie auch Behältern, bei welchen es sich um geschlossene Verpackungskartons oder Unterlagen, wie Schüsseln und Teller, handeln kann.

Über eine Leimschicht 12 wird auf der dem zu verpackenden Gut zugewandten Seite eine Laminatschicht 13 gehalten, die aus einem lebensmittelzulässigen Papier besteht. Bei diesem Papier kann es sich um ein Material nach dem deutschen Patent Nr. 40 06 833 handeln, welches sich durch die Verwendung von ungebleichter, intensiv gemahlener Cellulose, die Beigabe wasserlöslicher Polysaccharide und die Verdichtung der Papierbahn in einem Superkalander auszeichnet. Anstelle der Leimschicht 12 kann auch thermoplastischr Biokunststoff eingesetzt werden, der im allgemeinen aus Stärke oder ähnlichen Naturrohstoffen gewonnen wird.

Aufgrund seiner hohen Satinage besitzt es einen hinreichenden Antihafteffekt, so daß die aus dem erfindungsgemäßen Verbundmaterial bestehenden Behälter als Backbehälter eingesetzt werden können. Es ist hinreichend fettverträglich, so daß sich die aus dem erfindungsgemäßen Verbundmaterial hergestellten Behältnisse für die längerfristige Lagerung auch fetthaltiger Speisen eignen.

Die Figur 2 zeigt eine weitere Ausführungsform des erfindungsgemäßen Verpackungsmaterials 10. Auch hier besteht die Grundschicht 11 aus einem üblichen Papier oder einer Kartonage mit hohem Recyclinganteil, wobei diese Materialien im allgemeinen nicht mit Legensmitteln in Verbindung treten dürfen. Wie bei der ersten Ausführungsform ist eine Seite der Grundschicht 11 über eine Leimschicht 12 mit einem für Lebensmittel zulässigen Papier 13 beschichtet. Zusätzlich ist auch die Rückseite der Grundschicht 11 mit einer Papierschicht 15 laminiert, die über eine Leimschicht 14 an der Grundschicht 11 gehalten ist. Dabei entspricht die Papierschicht 15 hinsichtlich ihrer Art, insbesondere im Hinblick auf die lebensmittelrechtliche Zulassung, der Papierschicht 13.

Grundsätzlich können die Papierschichten 13 und 15 punktförmig oder flächig mittels eines Leims auf der Grundschicht 11 gehalten sein.

Als Leim kann ein für die Laminierung übliches Material eingesetzt werden. Bevorzugt wird jedoch ein Kaschierleim verwendet, der aus biologisch abbaubaren Materialien besteht, so daß er zusammen mit der Grundschicht 11 sowie den Laminatschichten 13 und 25 rückstandsfrei kompostierfähig ist.

Es soll an dieser Stelle noch einmal ausdrücklich angegeben werden, daß es sich bei der vorangehenden Beschreibung lediglich um eine solche beispielhaften Charakters handelt und daß verschiedene Abänderungen und Modifikationen möglich sind, ohne dabei den Rahmen der Erfindung zu verlassen. Dabei sind insbesondere weitere Einsatzmöglichkeiten für das mehrlagige Verbundmaterial in Erwägung zu ziehen.

## Patentansprüche

1. Verpackungsmaterial aus mehrlagigen Verbundstoffen, dadurch gekennzeichnet, daß Schichtmaterialien (11, 12, 13) eingesetzt werden, die sowohl einzeln als auch in Kombination miteinader vollständig kompostierfähig sind.

2. Verpackungsmaterial nach Anspruch 1, dadurch gekennzeichnet, daß die Schichtmaterialien (11, 12, 13) aus Papier, Karton und Biokunststoff bestehen.

3. Verpackungsmaterial nach einem der Ansprüche 1 oder 2, dadurch gekennzeichnet, daß die dem Produkt zugewandte Laminatschicht (13) aus lebensmittelrechtlich zulässigem Papier besteht.

4. Verpackungsmaterial nach einem der vorangehenden Ansprüche, dadurch gekennzeichnet, daß die dem Produkt abgewandte Laminatschicht als Grundschicht (11) aus einem Papier- oder Kartonagenmaterial mit hohem Recyclinganteil besteht.

5. Verpackungsmaterial nach einem der vorangehenden Ansprüche, dadurch gekennzeichnet, daß die Papierschichten (13, 15) durch die Verwendung ungebleichter, intensiv gemahlener Cellulose, die Beigabe wasserlöslicher Polysaccharide und die Verdichtung der Papierbahn in einem Superkalander hergestellt sind.

6. Verpackungsmaterial nach einem der vorangehenden Ansprüche, dadurch gekennzeichnet, daß der Leim (12, 14) punktförmig aufgetragen ist.

7. Verpackungsmaterial nach einem der Ansprüche 1 bis 5, dadurch gekennzeichnet, daß der Leim (12, 14) flächig aufgetragen ist.

8. Verpackungsmaterial nach einem der vorangehenden Ansprüche, dadurch gekennzeichnet, daß der thermoplastische Biokunststoff als Kaschiermedium zwischen den Schichtmaterialien (11, 12, 13) eingesetzt wird.

9. Verpackungsmaterial nach einem der vorangehenden Ansprüche, dadurch gekennzeichnet, daß der Verbundstoff (10) ein Einschlagpapier ist.

10. Verpackungsmaterial nach einem der Ansprüche 1 bis 8, dadurch gekennzeichnet, daß der Verbundstoff (10) als Tüte ausgebildet ist.

11. Verpackungsmaterial nach einem der Ansprüche 1 bis 8, dadurch gekennzeichnet, daß der Verbundstoff (10) als Beutel ausgebildet ist.

12. Verpackungsmaterial nach einem der Ansprüche 1 bis 8, dadurch gekennzeichnet, daß der Verbundstoff (10) als Sack ausgebildet ist.

13. Verpackungsmaterial nach einem der Ansprüche 1 bis 8, dadurch gekennzeichnet, daß die Grundschicht (11) aus einer Kartonage besteht und der Verbundstoff (10) als Behälter ausgebildet ist.

14. Verpackungsmaterial nach Anspruch 13, dadurch gekennzeichnet, daß der Verbundstoff (10) einen Teller darstellt.
